# EUROPÄISCHE PATENTANMELDUNG

(11) **EP 2 664 664 A1**
(43) Veröffentlichungstag der Anmeldung: **20.11.2013**
(21) Anmeldenummer: 13002527.3
(22) Anmeldetag: 14.05.2013
(51) Int. Cl.: C10L 5/44, C10L 9/10

(54) **Auf krautigen Pflanzen basierender Brennstoff**

(30) Priorität: 18.05.2012 DE 102012009799
(71) Anmelder: Oleofina GmbH, 56290 Gödenroth (DE)
(72) Erfinder: Seeger, Alexander, 56290 Gödenroth (DE)

(57) **Zusammenfassung**

Die vorliegende Erfindung befasst sich mit einer Mischung basierend auf krautigen Pflanzen, Öl und Holz.

## Beschreibung

### HINTERGRUND

Getreideausputz entsteht bei der Ernte von Getreide. Getreideausputz besteht im Allgemeinen aus Klein- und Bruchkorn, Halme, Blätter und Spelzen von Kulturpflanzen sowie Samen von Freindpflanzen (Unkrautsamen) bzw. Teilen von Fremdpflanzen (Unkräuter). Die Entsorgung von Getreideausputz ist in der Regel teuer, da es aufgrund des Fremdsamenanteils nicht wieder als Biomasse auf Felder ausgebracht werden kann. Eine Möglichkeit der Entsorgung ist die Verbrennung. In neuerer Zeit wird deshalb Getreideausputz auch zur Erzeugung von Energie verwendet.

Die Verfeuerung von Getreide erfordert jedoch spezielle Anlagen, da Getreide sich von konventionellen Bioenergieträgern wie Holz unterscheidet. Für ein möglichst vollständiges Verbrennen von Getreide sind hohe Verbrennungstemperaturen erforderlich. Das fuhrt jedoch dazu, dass die Asche wegen ihres niedrigen Schmelzpunkts versintert und Schlacken bildet, die sich in konventionellen Biomassebrennöfen wie Ascherostofensysteme ablagern und diese verschmutzen.

Es ist bekannt, dass der Verschlackung durch die Zugabe von kalkhaltigen Zuschlagstoffen, die den Ascheschmelzpunkt erhöhen, reduziert werden kann. Jedoch steigt dadurch die anfallende Aschemenge stark an. So ist bei 0,5 bis 2 Gewichts-Prozent Kalk im Brennstoff eine um bis zu 60 % erhöhte Aschemenge zu beobachten.

Zur Verbrennung können alle geläufigen Getreide verwandt werden. Spelzgetreide wie Gerste und Hafer zeichnet sich bei der Verbrennung durch relativ hohe Ascheschmelzpunkte (~1200 °C) im Vergleich zu Nacktgetreiden wie Weizen bzw. Triticale (~700 °C/800 °C) aus, was die Verschlackung deutlich reduziert, zugleich fällt jedoch bei Spelzgetreiden wieder mehr Asche an.

Eine andere Möglichkeit Getreide in der Energiegewinnung einzusetzen stellt die Kombination von Getreide mit anderen Brennstoffen dar, wie zum Beispiel Hackschnitzeln aus Holz. Dies ermöglicht in gewissem Rahmen eine Verfeuerung in konventionellen Anlagen, die für eine vollständige Beschickung mit Getreide technisch ansonsten ungeeignet sind. Durch die Zumischung von Holz wird eine günstigere Sauerstoffzufuhr sowie eine Reduzierung der Temperatur im Glutbett erreicht, was der Schlackenbildung entgegenwirkt. Die durch diesen Effekt geringere Gasverbrennungstemperatur kann jedoch zur anschließenden Kondensation des Rauchgases führen was zu Schäden an den Wärmetauschern führt.

Bekannte Verbrennungsanlagen befördern das Brenngut mittels Förderschnecker oder Saugleitungen in die Brennkammer, wodurch eine kontinuierliche Zufuhr des Brennstoffs und ein gleichbleibender Ablauf des Verbrennungsprozesses gewährleistet ist. Aufgrurd des relativ hohen Asche- und Schlackeanfalls ist jedoch die regelmäßige Abfuhr von Brennresten erforderlich.

DE 103 34 645 beschreibt eine auf 20% bis 80% Holz basierenden Brennstoff, der weitere Bestandteile aus nachwachsenden Rohstoffen ohne Bindemittel und stärkehaltige Materialien enthält. Die Schrift offenbart jedoch keinen Brennstoff aus Holz, krautigen Pflanzen und Öl entsprechend der vorliegenden Erfindung.

DE 10 2004 042 659 beschreibt Brennstoffe, welche einen agraren Abfallstoff(z. B. Getreidespelzen) enthält sowie einen Zusatzstoff zur Heizwerterhöhung und einen zweiten Zusatzstoff zur Verringerung von Schlackebildung. Jedoch offenbart die Schrift keinen aus krautigen Pflanzen und Holz bestehenden Brennstoff

DE 20 2006 014 651 beschreibt einen Brennstoff, zur organischen Rohstoffen und/oder Agrarreststoffen, der mindestens einen Zusatz zur Heizwerterhöhung und zur Verringerung der Schlackebildung enthält. Der Brennstoff enthält jedoch zwischen 15% und 25% organisches Öl und Natriumperborat, einen als giftig und gesundheitsschädlich eingestuften Stoff, der als Sauerstofflieferant und zur Erhöhung der Ascheerweichungspunktes benötigt wird. Zudem enthält keiner der offenbarten Brennstoffe eine Mischung aus krautigen Pflanzen und Holz.

DE 29 2007 004 725 beschreibt Brennstoffe, die Holzkleinteile aufweist, wobei die Holzkleinteile einen Zusatzstoff auf fettsäurebasis und/oder Getreidebasis und/oder Stärkebasis enthalten. Jedoch offenbart die Schrift einen zur Hauptsache aus krautigen Pflanzen bestehenden Brennstoff. Vielmehr offenbart die Schrift einen Brennstoff auf Holzbasis, dem unter anderem Öle, Stärke oder Getreide zugemischt werden könnte. Diese Zusatzstoffe sollten jedoch bei fertiger Zusammensetzung 2% nicht überschreiten.

EP 1 471 132 beschreibt einen Brennstoffformkörper enthaltend Ölsaatpresskuchen. Der Ölsaatpresskuchen wird hierbei als Bindemittel eingesetzt um dem Formkörper eine höhere mechanische Stabilität zu gewähren und um die Staubentwicklung bei der Herstellung der Formkörper zu reduzieren. Die Schrift offenbart jedoch keinen erfindungsgemäßen Brennstoff.

### AUFGABE

Der vorliegenden Erfindung liegt die Aufgabe zugrunde, einen auf Süßgräsern basierenden Brennstoff zur Verfügung zu stellen, der verbesserte Abbrenneigenschaften aufweist. Ein solcher Brennstoff ermöglicht zudem eine kostengünstige und umweltschonende Entsorgung von krautigen Planzen durch Verbrennung.

### LÖSUNG

Diese Aufgabe wird durch eine Mischung (Brennstoff) die 65%(w/w)-93%(w/w) krautige Pflanzen und/oder Kreuzblütengewächse. 2%(w/w)-8%(w/w) Öl und 5%(w/w)-27%(w/w) Holz umfasst, bevorzugt die 65%(w/w)-90%(w/w) krautige Pflanzen und/oder Kreuzblütengewächse, 3%(w/w)-S%(w/w) Öl und 7%(w/w)-27%(w/w) Holz umfasst, gelöst. In einer weiteren bevorzugten Ausführungsform umfasst die Mischung aus 77,5%(w/w) bis 90%(w/w) krautige Pflanzen, bevorzugt geschroteter krautiger Pflanzen, 3%(w/w) bis 5,5%(w/w) Öl, 7%(w/w) bis 17%(w/w) Holz und optional 1%(w/w) bis 5%(w/w) Brandkalk.

In einer bevorzugten Form liegt der Anteil eingesetzter krautiger Pflanzen in der erfindungsgemäßen Mischung als geschroteter krautiger Pflanzen vor. Besonders bevorzugt umfasst der Anteil krautiger Pflanzen in der erfindungsgemäßen Mischung mindestens 80% Getreide, bevorzugt Getreide ausgewählt aus einer Gruppe bestehend aus Weizen, Dinkel, Roggen, Hafer, Gerste, Triticale und Mischungen daraus. Der Anteil eingesetzter (geschroteter) krautiger Pflanzen in der erfindungsgemäßen Mischung besteht in einer bevorzugten Ausführungsform aus Getreideausputz.

In einer weiteren bevorzugten Ausführungsform umfasst der Anteil krautiger Pflanzen in einer erfindungsgemäßen Mischung Raps. In einer besonders bevorzugten Form beträgt der Anteil an Rapssamen im Anteil krautiger Pflanzen maximal 5%(w/w).

In einer weiteren bevorzugten Ausführungsform besteht der Anteil krautiger Pflanzen aus zerkleinertem Pflanzenmaterial mit einer maximalen Schrotgröße von 20 mm.

In einer weiteren bevorzugten Ausführungsform liegt der Anteil an eingesetztem Holz als Holzmehl und/oder Hackschnitzel vor, besonders bevorzugt aus Holzstücken, die eine maximale Kantenlänge (Größe bzw. maximale Länge der längsten Achse eines Holzstückchens) von 10 cm oder weniger, z. B. 5 cm oder weniger wie 10 mm oder weniger oder gar 5 mm oder weniger, haben.

In einer bevorzugten Ausführungsform besteht das Holz in einer erfindungsgemäßen Mischung zu mindestens 80%(w/w) aus Holz von Douglasie (Pseudotsuga), Goldlärche (Pseudolarix amabilis), Hemlocktanne (Tsuga), Kicfer/Föhre (Pinus), Lärche (Larix), Lebensbaum (Thuja), Mammutbaum (Sequoioideae) (Chamaecyparis), Sicheitanne (Cryptomeria), Tanne (Abies), Zeder (Cedrus), Zypresse (Cupressus), Ahorn (Acer), Erle (Alnus), Birke (Betula), Hainbuche (Carpinus), Weißdorn (Crataegus), Ulme (Ulmus), Buche (Fagus), Esche (Fraxinus), Stechpalme (llex), Äpfel (Malus), Pappel (Populus), Steinobstbäume (Prunus), Birne (Pyrus), Eiche (Quercus), Weide (Salix), Mchlbcere (Sorbus), Linde (Tilia), Robinie (Robinia), Kastanien (Castanea), Platane (Platanus), Ulme (Ulmus), oder Mischungen daraus.

In einer bevorzugten Ausführungsform umfasst oder besteht das Öl in einer erfindungsgemäßen Mischung aus Mineralöl, Pflanzenöl oder Mischungen aus Pflanzenöl und Mineralöl oder tierischem Öl.

In einer bevorzugten Ausführungsform umfasst das Pflanzenöl in einer erfindungsgemäßen Mischung aus Pflanzenöl ausgewählt aus einer Gruppe bestehend aus Olivenöl, Palmöl, Cocasöl, Erdnussöl, Sonnenblumenöl, Sesamöl, Maisöl, Rapsöl, Nussöl oder Mischungen daraus, bevorzugt besteht das Pflanzenöl aus Pflanzenöl oder Pflanzenölmischungen mit mindestens einem Pflanzenöl ausgewählt aus einer Gruppe bestehend aus Rapsöl, Nussöl, Mandelöl und Mischungen daraus enthält.

In einer bevorzugten Ausführungsform beträgt der Wassergehalt einer erfindungsgemäßen Mischung zwischen 5%(w/w) und 24%(w/w) bezogen auf das Gewicht der Mischung.

Bevorzugt liegt eine erfindungsgemäße Mischung in Form einer amorphen Masse oder als gepresster, fester Brennstoffes vor, z. B. als Pellet oder Brikett, vor.

Ein weiterer Aspekt der vorliegenden Erfindung ist die Verwendung der erfindungsgemäßen Mischung gemäß einem der vorherigen Ansprüche als Brennstoff, bevorzugt in einem Biomassenkessel, besonders bevorzugt eines Grundofens.

Ein weiterer Aspekt der vorliegenden Erfindung bezieht sich auf ein Verfahren zur Gewinnung von Energie umfassend der Verbrennung einer erfindungsgemäßen Mischung in einem Grundofen.

### DEFINITIONEN

Etwa: Der Fachmann versteht, dass ein Wert z. B. durch Messungenauigkeiten oder durch biologische Varianz schwanken kann. Generell können Werte, die sich auf biologisches Material beziehen, um z. B. bis zu 10%, bevorzugt bis zu 5% oder 3% schwanken. Dies wird durch den Begriff "etwa" vor diesen Werten zum Ausdruck gebracht. Der Begriff "etwa" umfasst auch genau den angegebenen Wert. Somit wird in einer Ausführungsform auch explizit der Wert hinter dem Ausdruck "etwa" offenbart. In anderen Worten, der Ausdruck "etwa X%" bezieht sich in einer speziellen Ausführungsform explizit auf X%.

Umfassen: Der Ausdruck "umfassen" ist generell als nicht limitierend zu verstehen. Zur Illustration: Eine Mischung oder Gruppe umfassend einen Stoff oder eine Gruppe von Stoffen kann entsprechend weitere Stoffe beinhalten. Der Ausdruck "umfassen" beinhaltet in einer bevorzugten Ausführungsform in dieser Anmeldung, selbst wenn dies nicht explizit angegeben ist, auch den Ausdruck "bestehend aus", d.h. das eine Mischung oder Gruppe, die einen Stoff oder eine Gruppe von Stoffen umfasst in einer bevorzugten Ausführungsform aus diesem Stoff oder dieser Gruppe von Stoffen besteht, ohne dass weitere Stoffe derselben Gruppe anwesend sind. Zum Beispiel kann ein Getreideanteil umfassend Weizen und Gerste generell weitere Getreidearten wie Roggen enthalten. In einer Ausführungsform bezieht sich der Ausdruck "Getreideanteil umfassend Weizen und Gerste" jedoch auch auf einen Getreideanteil bestehend aus Weizen und Gerste. In diesem Fall kann keine weitere Getreideart anwesend sein.

Ein: Der Ausdruck "ein" bezieht sich generell auf den unbestimmten Artikel und bedeutet entsprechend "ein (1) oder mehr" oder "mindestens ein (1)". Sollte sich der Ausdruck "ein" nur auf eine Sache beziehen, so ist das im Text durch den Ausdruck "ein (1)" gekennzeichnet.

Gewichtsprozentangaben: Gwichtsprozentangaben werden als %(w/w) angegeben.

Krautige Pflanzen: Monokotyledonen, die kein sekundäres Dickenwachstum aufweisen und damit nicht verholzen. Monokotyledonen oder Einkeimblättrigen sind eine der großen Gruppen der Bedecktsamer. Bevorzugt werden krautige Pflanzen im Sinn der vorliegenden Erfindung im Gegensatz zu verholzten Pflanzen ohne Stützen nicht höher als etwa 2,00 m. Dem Fachmann ist bekannt, dass bei krautigen Pflanzen eine Verholzung nicht auftritt bzw. eine Verholzung nur der bodennahe Teil der oberirdischen Triebe betrifft. Entsprechend ist der Ligningehalt von krautigen Pflanzen im Sinn der vorliegenden Erfindung geringer als der Ligningehalt von Holz im Sinn der vorliegenden Erfindung. Ein weiteres Unterscheidungsmerkmal zwischen krautigen Pflanzen und Holz ist der Stickstoffgehalt. Generell ist der Stickstoffgehalt von krautigen Pflanzen höher als der von Holz. Süßgrasartige und Süßgräser sowie Getreide zählen zu den krautigen Pflanzen.

Süßgrasartige: Süßgrasartige (Poales) sind eine Ordnung der Commeliniden innerhalb der Monokotyledonen. Die Ordnung Poales umfasst 16 Familien: Anarthriaceae, Bromeliengewächse (Bromeliaceae), Centrolepidaceae, Riedgräser (Cyperaceae), Ecdeiocoleaceae, Eriocaulaceae, Flagellariaceae, Joinvilleaceae, Binsengewächse (Juncaceae), Mayacaceae, Süßgräser (Poaceae), Rapateaceae, Restionaceae, Thurniaceae, Rohrkolbengewächse (Typhaceae, einschließlich Igelkolbengewächse (Sparganiaceae)), Typha, Sparganium und Xyridaceae. Süßgräser gehören zur Kategorie der Süßgrasartigen.

Süßgräser: Süßgräser (Poaceae = Gramineae) sind eine weltweit in allen Klimazonen verbreitete Pflanzenfamilie, die durch die typische grasartige Gestalt der zugehörigen Arten gut gekennzeichnet ist. Süßgräser gehören zu den ältesten Nutzpflanzen. Besonders bevorzugte Süßgräser im Sinn der vorliegenden Erfindung sind Getreide.

Getreide: Als Getreide werden wegen ihrer Körnerfrüchte kultivierte Pflanzen der Familie der Süßgräser bezeichnet. Der Ausdruck "Getreide" bezieht sich in der vorliegen Anmeldung insbesondere auf Weizen, Dinkel, Roggen, Hafer, Gerste, Triticale, Mais, Reis und Hirse, umfasst jedoch auch andere, bekannte Getreidearten. Insbesondere Weizen, Dinkel, Roggen, Hafer, Gerste und Triticale sind glutenhaltige Getreidearten während Mais, Reis und Hirse zu den glutenfrei Getreidegattungen gezählt werden.

Schroten: Als schroten bezeichnet man allgemein die mechanische Verarbeitung von z. R. Samen, Körner, Spelzen, Blätter, Früchte, Blüten, Halme und anderen Pflanzenteilen zur Verringerung ihrer Größe. Dies kann z. B. durch Zerkleinern auf einem Walzenstuhl, Quetschen oder Mahlen mit einer Schrotmühle geschehen.

Geschrotete krautige Pflanzen: Unter dem Begriff "geschrotete krautige Pflanzen" im Sinn der vorliegenden Erfindung werden Bestandteile von krautigen Pflanzen verstanden, die bei einer normal wachsenden Pflanze überirdisch liegen: Samen, Körner, Spelzen, Blätter, Früchte, Blüten und Halme. In der Regel wird Wurzelgewebe nicht von dem Ausdruck "geschrotete krautige Pflanzen" umfasst. Die Granulation der geschrotete krautige Pflanzen (der Pflanzenteilchen bzw. der Schrote) kann durch Einstellungen bei Zerkleinerung und/oder Siebung z. B. im Plansichter gesteuert werden. Entsprechende Verfahren sind dem Fachmann bekannt.

Geschrotetes Getreide(reste) bzw. Raps(reste): Unter geschroteten Getreide bzw. Raps ist grob zerkleinertes Getreide bzw. Raps gemeint. Die Granulation des zerkleinerten Getreides bzw. Raps (der Getreideausputzteichen bzw. der Rapsausputzteilchen, in anderen Worten der Schrote) kann durch Einstellungen bei Zerkleinerung und/oder Siebung z. B. im Plansichter gesteuert werden. Entsprechende Verfahren sind dem Fachmann bekannt.

Spelze: Eine Spelze ist ein Hochblatt im Ährchen (Als Ährchen bezeichnet man in der Botanik einen Blütenstand, an dem in ährenartiger Anordnung die Blüten hinter Deckblättem sitzen), dem Teilblütenstand der Süßgräser (Poaceae) und der Sauergräser (Cyperaceae). Spelzen sind meist trockenhäutig und umgeben die Blüten. Bei den Süßgräsern sind im Ährchen mehrere Spelzen vorhanden. Form und auch Anzahl der Spelzen sind vielfach charakteristische Bestimmungsmerkmale für die Grasarten.

Halme: Die Stängel der Süßgräser werden als Halme bezeichnet. Diese sind meist hohl und rund. Nur wenige Grasarten besitzen markige Stängel. Der Anteil markiger Stängel in dem Anteil krautiger Pflanzen im Sinn der vorliegenden Erfindung sollte etwa 3%(w/w), bevorzugt etwa 2,5%(w/w) oder gar etwa 2%(w/w) nicht überschreiten.

Korn: Im Sinn der vorliegenden Erfindung trockene, ruhende, generative - d. h. die vollständige, durch Befruchtung entstandene Keimanlage der Pflanzen enthaltende Fortpflanzungsorgane (z. B. Samen).

Kulturpflanzen: Eine Kulturpflanze im Sinn der vorliegenden Erfindung ist eine Pflanze, die durch den Menschen zielgerichtet als Nutzpflanze, bevorzugt auf Feldern, angebaut wird. Kulturpflanzen weisen im Gegensatz zur Wildpflanze typische Veränderungen auf. Beispielsweise kann die Keimruhe der ausgereiften Samen reduziert sein. So fallen z. B. bei Kulturgetreidearten die später zu erntenden Samen nicht so schnell aus ihrem Sitz.

Getreide-Ausputz: Unter Getreide-Ausputz werden die Reste aus der Getreidereinigung von Kulturgetreide verstanden. Getreide-Ausputz besteht im Allgemeinen aus geschroteten Getreideresten z. B. Klein- und Bruchkorn. Spelzen und Halme), geschroteten Pflanzenteilen von Fremdpflanzen (wie pflanzliche Organe und Teile, die bei Pflanzen oberirdisch liegen (z. B. Blätter, Samen, Blüten, Halme und Blätter)) und gegebenenfalls anorganischen Verunreinigungen.

Getreidereste: Z. B. Klein- und Bruchkorn, Spelzen und Halme von Getreide. In einer Ausführungsform handelt es sich dabei um eine Getreideart wie Weizen, Dinkel, Roggen, Gerste, Triticale und/oder Hafer.

Raps: Raps (*Brassica napus*) ist eine Pflanzenart aus der Familie der Kreuzblütengewächse (Brassicaceae). Raps ist eine ein- oder zweijährige, krautige Pflanze mit aufrechter, verzweigter Sprossachse. Es ist eine wirtschaftlich bedeutende Nutzpflanze.

Rapsausputz: Unter Raps-Ausputz werden die Reste aus der Rapsernte von Kulturraps verstanden Raps-Ausputz besteht im Allgemeinen aus geschroteten Rapsresten z. B. maximal 5% Raps-Samen, Stängel und Blätter, geschroteten Pflanzenteilen von Fremdpflanzen (wie pflanzliche Organe und Teile, die bei Pflanzen oberirdisch liegen (z. B. Blätter, Samen, Blüten, Halme und Blätter)) und gegebenenfalls anorganischen Verunreinigungen.

Öl: Im Sinn der vorliegenden Erfindung umfasst der Begriff Öl Mineralöle, tierische Öle und pflanzliche Öle (Pflanzenöl).

Pflanzenöl: Im Allgemeinen bezieht sich der Ausdruck "Pflanzenöl" in der vorliegenden Anmeldung auf Fette und fette Öle, die aus Pflanzen, bevorzugt aus Samen oder Früchten von Pflanze, stammen. Fette und fette Öle im Sinn der vorliegenden Erfindung beziehen sich sowohl auf die freie Fettsäure(n) als auch auf Ester von Fettsäuren, wie z. B. des dreiwertigen Alkohols Glycerin (Propan-1,2,3-triol) der mit drei, meist verschiedenen, überwiegend geradzahligen und unverzweigten aliphatischen Monocarbonsäuren, den Fettsäuren, verbunden ist. Fette und fette Öle unterscheiden sich nur in ihrem Agregatzustand bei Standardbedingungen (25°C; 1013 hPa). Während ein Pflanzenöl aus fetlem Öl bei Standardtemperaturen flüssig ist, ist ein Pflanzenöl aus Fett bei Standardbedingungen überwiegend fest. Fettsäuren sind aliphatische ungesättigte oder gesättigte Monocarbonsäuren. Beispiele für Fettsäuren sind: Caprylsäure, Laurinsäure, Myristinsäure, Palmitinsäure, Margarinsäure, Stearinsäure, Arachinsäure, Behensäure, Lignocerinsäure (gesättigte Fettsäuren); Ölsäure, Myrestoleinsäure, Palmitoleinsäure, Petroselinsäure, Gadoleinsäure, Icosensäure, Cetoleinsäure, Erucasäure, Nervonsäure, Linolsäure, Alpha-Linolensäure, Gamma-Linolensäure, Calendulansäure, Punicinsäure, Alpha-Elaeostearinsäure, Beta-Elaeostearinsäure, Vernolsäure (ungesättigte Fettsäuren). Beispiele für ölhaltige Samen im Sinne der vorliegenden Erfindung sind finden sich in Raps, Oliven, Nüssen (Walnuss, Haselnuss, Buchecker, Cashewnuss, Macadamianuss, Pistazie), Mandeln, Soja, Sonnenblumenkernen, Palmfrüchten und Coconüssen. Pflanzenöle werden zumeist durch Auspressen und Extrahieren von Ölfrüchten und -samen gewonnen. Nach dem Anteil an ungesättigten Fettsäuren unterscheidet man zwischen nichttrocknenden (Bsp. Olivenöl), halbtrocknenden (Bsp. Soja- oder Rapsöl) und trocknenden Pflanzenölen (Bsp. Lein- oder Mohnöl). Der Begriff "Trocknung" bezeichnet hierbei nicht Verdunstung, sondern das durch Oxidation mit Sauerstoff und anschließende Polymerisation der ungesättigten Fettsäuren bedingte Verdicken ("Verharzen" des Öls. Der Begriff Pflanzenöl umfasst sowohl raffinierte Öle (Das Öl wird zunächst bei Temperaturen von über 100 °C heiß gepresst), nichtraffinierte Öle (Die Rohware wird kalt gepresst, eine geringe Wärmezufuhn bei der Pressung bis ca. 60 °C ist möglich), kaltgepresste Öle (Kaltgepresste Öle werden ohne weitere Wärmezufuhr nur durch Druck oder Reibung hergestellt. Auf die Pressung folgt meist eine Filtration), native Öle (native Öle sind naturbelassen und kaltgepresst ohne weitere Wärmezufuhr) und Öle aus geschälter Saa (Die Saat wird in Schälmühlen von der Schale befreit. Die Kerne werden anschließend zu kaltgepresstem, nativem Öl weiterverarbeitet. Auf eine Raffination kann verzichtet werden. Das gewonnene Öl ist ein reines Kernöl).

Rapsöl: Rapsöl ist ein pflanzliches Öl und wird aus den Samen von Raps (Brassica napus) oder seltener auch aus den Samen des nah verwandten Ölrübsens (Brassica rapa subsp. oleifera) gewonnen. Rapsöl wird in Ölmühlen durch Pressung oder Extraktion der Rapssaat gewonnen. Hierbei können Heißpressung/Raffination in Ölmühlen sowie Kaltpressung in Ölmühlen zur Herstellung eingesetzt werden. Bevorzugt wird Rapsöl im Sinne der vorliegenden Erfindung durch Kaltpressung gewonnen.

Nussöl: Nussöl wird aus Nüssen, wie z. B. aus den ölhaltigen Kernen (Samen) von Walnüssen oder Hasclnüssen, gewonnen. Die Kerne können ungeröstet, teilweise gerösteten oder geröstet sein.

Mineralöl: Im Gegensatz zu Fetten und fetten Ölen (Triglyceride, auch Trifettsäureester des Glycerins) bestehen die in ihren physikalischen Eigenschaften ähnlichen Mineralöle und Mineralfette aus paraffinischen (gesättigte kettenförmige Kohlenwasserstoffe), naphthenischen (gesättigte ringförmige Kohlenwasserstoffe) und aromatischen (ringförmige Kohlenwasserstoffe mit aromatischem Doppelbindungssystem) Bestandteilen. Mineralöle enthalten daneben auch noch Alkene (Olefine) sowie je nach Provenienz schwankende geringe Mengen an schwefelhaltigen und stickstoffhaltigen organischen Verbindungen. Mineralöl wird meist durch Destillieren aus Erdöl oder mineralischen Rohstoffen.

Verholzung (Lignifizierung): Die Lignineinlagerung in Zellwänden von Pflanzen. Stark verholzte Zellen sterben ab und haben sehr dicke und steife Zellwände. Die Verholzung ermöglichtes der Pflanze, sehr stabile Strukturen zu bilden und damit wird das Wachsen in größere Höhen ermöglicht.

Lignin: Lignine bilden eine Gruppe von phenolischen Makromolekülen, die sich aus verschiedenen Monomerbausteinen zusammensetzen. Es handelt sich um feste Biopolymere, die in die pflanzliche Zellwand cingelagert werden und dadurch die Verholzung der Zelle bewirken (Lignifizierung). Es handelt sich um höhermolekulare (relative Molekülmasse etwa 5000-10000) Abkömmlinge der Phenylpropanoide, die als Substituenten des Benzolrings neben einer Propankette eine Hydroxygruppe, ein oder zwei Methoxy- sowie diverse Restketten (Alkoxy- oder Aryloxy-Gruppen) enthalten. Lignin kann mit verschiedenen Nachweisreaktionen, die auf dem Aufbau des Stoffes beruhen, nachgewiesen werden, z. B. Rotfärbung durch salzsaure Phloroglucinlösung; Gelbfärbung mit Anilin/Schwefelsäure; Violettfärbung mit Schiffschem Reagenz. Bevorzugt im Sinne der vorliegenden Erfindung ist eine qualitative Analyse mittels Gaschromatographie. Zur Bestimmung des Lignin-Anteils kommt das Klason-Verfahren zur Anwendung, bei dem die Polysaccharide durch eine zweistufiges Säurehydrolyse abgebaut und der verbleibende Ligninrest anschließend gewogen wird (Klasen-Lignin). Bei GS-Ligninen ist anschließend eine UV-Spektroskopie der Säurelösung notwendig, da diese säurelösliche Anteile des Lignin enthält. Dem Fachmann sind derartige Verfaltren aus dem Stand der Technik bekannt.

Holz: Holz wird auch als lignifiziertes (verholztes) pflanzliches Gewebe begriffen. Holz enthält Alpha-Cellulose (bis etwa 35%(w/w)), Hemicellulose (bis etwa 25%(w/w)), Lignin (mindestens 10%(w/w) bis etwa 30%(w/w)), Wasser (bis etwa 6%(w/w)) und Mineralstoffe sowie Wachse und Fette. Bevorzugt stammt Holz im Sinn der vorliegenden Erfindung von Bäumen, es kann jedoch auch von Sträuchern oder einer Mischung aus beiden stammen.

Bäume im Sinn der vorliegenden Erfindung sind mehrjährige, holzige Samenpilanzen, die einen dominierenden Spross aufweisen, der durch sekundäres Dickenwachstum an Umfang zunimmt. Diese Merkmale unterscheiden einen Baum von Sträuchern, Farnen, Palmen und anderen holzigen Pflanzen. Stamm, Äste und Zweige verlängern sich jedes Jahr, verholzen dabei und nehmen kontinuierlich an Umfang zu. Im Gegensatz zum Strauch ist es das besondere Merkmal der Bäume, dass die Endknospen über die Seitenknospen dominieren und sich dadurch ein vorherrschender Haupttrieb herausbildet (Akrotonie). Sträucher sind holzige Pflanzen mit einer basitonen Wuchsform. Das heißt, sie haben keinen Stamm als Hauptachse, sondern sie bilden regelmäßig (üblicherweise jährlich) Stämme aus bodennahen Knospen. Jedoch verholzen auch Sträucher.

Hackschnitzel: Unter Hackschnitzel im Sinn der vorliegenden Erfindung werden Holzstückchen verstanden, die eine maximale Größe von 10 cm aufweisen, d.h. durch ein 10 cm Sieb (Sieb mit 10 cm großen Sieböffnungen) gesiebt werden können. Die Körngröße von Hackschnitzeln, die durch ein Sieb mit 10 cm großen Sieböffnungen passen haben entsprechend eine Korngröße von 10 cm oder kleiner. Dem Fachmann ist klar, dass entsprechend zumindest in 2 Dimensionen die Kantenlängen solcher Holzstücke maximal 10 cm betragen. Die Kantenlänge in die dritte Dimension kann gegebenenfalls etwas größer sein, in der Regel jedoch nicht größer als 50%. Bei einer Körnergröße von 10 cm kann entsprechend eine Dimension bis zu 15 cm groß sein. Bevorzugt ist jedoch, dass die Kantenlänge in der dritten Dimension ebenfalls etwa die maximalen Kantenlängen der übrigen zwei Dimensionen aufweist. Besonders bevorzugt ist jedoch auch hier die Kantenlänge in der dritte Dimension maximal die Länge der übrigen zwei Dimensionen aufweist. Im Allgemeinen werden unter Hackschnitzel im Sinn der vorliegenden Erfindung Hackschnitzel beziehungsweise Holzhackschnitzel (oder auch Hackgut) und Schredderholz verstanden. Je nach Herkunft werden auch die Bezeichnungen Rindenhackschnitzel oder Waldhackschnitzel (Waldhackgut) verwendet. Hackschnitzel sind mit schneidenden Werkzeugen zerkleinertes Holz bzw. durch mit stumpfen, zertrümmernden Werkzeugen erzeugte Holzbruchstücke. Erzeugt. Hackschnitzel dienen vor allem als Rohstoff für die hotzverarbeitende Industrie sowie als biogener und regenerativer Brennstoff.

Holzmehl: Unter dem Begriff Holzmehl im Sinne der vorliegenden Erfindung werden Holzstücke verstanden, die eine maximale Größe von 5 mm haben, d.h. durch ein 5 mm Sieb gesiebt werden können. Dem Fachmann ist klar, dass entsprechend zumindest in 2 Dimensionen die Kantenlängen solcher Holzstücke maximal 5 mm betragen. Die Kantenlänge in die dritte Dimension kann gegebenenfalls größer als 5 mm sein, wie z. B. maximal 10 mm oder maximal 15 mm, bevorzugt ist jedoch auch hier die Kantenlänge in der dritte Dimension maximal 5 mm.

Heizwert: Im Sinn der vorliegenden Erfindung der Heizwert die bei einer Verbrennung maximal nutzbare Wärmemenge, bei der es nicht zu einer Kondensation des im Abgas enthaltenen Wasserdampfes kommt, bezogen auf die Menge des eingesetzten Brennstoffs. Zur Bestimmung der Verbrennungswärme kann ein getrockneter Stoff unter Sauerstoffüberschuss in einem Kalorimeter unter Druck verbrannt. Dabei entstehen als Verbrennungsprodukte gasförmiges Kohlendioxid und Wasser als Kondensat (das bei den Druckverhältnissen flüssig ist). Diese Werte werden standardmäßig in Tabellenwerken auf 25 °C bezogen.

Der Brennwert ist identisch mit dem absoluten Betrag der mit negativen Vorzeichen angegebenen Standardverbrennungsenthalpie der allgemeinen Thermodynamik. D. h. der Wassergehalt (aus Produktfeuchteresten und aus den oxidierten Wasserstoffatomen im Brennstoff stammend) wird bei dieser Berechnung nicht dampfförmig_{,} sondern vor und nach der Verbrennung in flüssiger Form vorliegend angesehen. Der Heizwert eines Stoffes kann nicht direkt experimentell ermittelt werden. Der Heizwert bezieht sich auf eine Verbrennung, bei der nur gasförmige Verbrennungsprodukte entstehen. Zur Berechnung wird daher vom Brennwert, sofern Wasserstoffatome im Brennstoff enthalten sind, die Verdampfungsenthalpie des Wassers abgezogen, daher liegen die Heizwerte solcher Brennstoffe meist ca. 10 % unter ihren Brennwerte.

Zur Bestimmung des Ascheschmelzverhaltens wird gewöhnlich ein geformter Aschetestkörper erhitzt. Dabei treten folgende dem Fachmann wohlbekannte Aggregatzustände auf: Erweichungstemperatur (Ecken werden rund), Sphärischtemperatur und Halbkugeltemperatur (geschmolzene Asche bildet Halbkugel), Fließtemperatur (geschmolzene Asche fließt auseinander).

Alle Ausführungsformen sind, unabhängig davon ob sie erwähnte Ausführungsformen, bevorzugte Ausführungsfurmen, besonders bevorzugte Aus führungsformen oder dergleichen sind, frei miteinander kombinierbar solange die Kombination nicht wider geltenden Naturgesetzen wäre.

### DETAILLIERT BESCHREIBUNG

Die erfindungsgemäße Mischung, die bevorzugt ein bei Standardbedingungen überwiegend fester Brennstoff ist, umfasst etwa 65%(w/w) bis 93%(w/w), bevorzugt etwa 65%(w/w) bis 90%(w/w), mehr bevorzugt 70% (w/w) bis 90% (w/w), besonders bevorzugt etwa 75%(w/w) bis 85%(w/w) krautige Pflanzen; etwa 2%(w/w) bis 8%(w/w), bevorzugt etwa 3%(w/w) bis 8%(w/w), besonders bevorzugt etwa 3%(w/w) bis 6%(w/w) Pflanzenöl; und etwa 5%(w/w) bis 27%(w/w), bevorzugt etwa 7%(w/w) bis 27%(w/w) bevorzugt etwa 7%(w/w) bis 20%(w/w), besonders bevorzugt etwa 7%(w/w) bis 15%(w/w) Holz.

### (Geschrotete) krautige Pflanzen

Der Anteil krautige Pflanzen im Sinn der vorliegenden Erfindung bezieht sich im Allgemeinen auf oberirdischen Teile/Organe einer Pflanze. Dies schließt im allgemeinen Wurzelgewebe aus. Als oberirdische Teile/Organe einer krautigen Pflanze werden z. B. Samen, Körner, Spelzen, Blätter, Blüten, Früchten und Halme angesehen. Bevorzugt enthält der Anteil an geschrotete krautige Pflanzen kein Wurzelgewebe. Je nach Ernteart von krautigen Pflanzen kann jedoch ein Anteil von etwa 10%(w/w) oder weniger, bevorzugt etwa 5%(w/w) oder weniger, wie etwa 3%(w/w) oder weniger, oder etwa 2%(w/w) oder weniger Wurzelgemebe im Anteil geschrotete krautige Pflanzen zur Herstellung der erfindungsgemäßen Mischung vorliegen.

In einer Ausführungsform besteht der Anteil krautige Pflanzen in einer erfindungsgemäßen Mischung bevorzugt aus geschroteten krautigen Ptlanzen.

In einer bevorzugten Ausführungsform umfasst der Anteil krautiger Pflanzen zur Herstellung einer erfindungsgemäßen Mischung bzw. in einer erfindungsgemäßen Mischung mindestens 75%(w/w), mindestens 80%(w/w), mindestens 85%(w/w), mindestens 90%(w/w), bevorzugt mindestens 95%(w/w) Süßgräser bezogen auf den Anteil krautiger Pflanzen. In einer besonders bevorzugten Ausführungsform besteht der Anteil krautiger Pflanzen aus Süßgräsern.

In einer weiteren bevorzugten Ausführungsform umfasst der Anteil krautiger Pflanzen zur Herstellung einer erfindungsgemäßen Mischung bzw. in einer erfindungsgemäßen Mischung mindestens 80%(w/w), mindestens 90%(w/w), bevorzugt mindestens 95%(w/w) Getreide bezogen auf den Anteil krautiger Pflanzen. In einer besonders bevorzugten Ausführungsform besteht der Anteil krautiger Pflanzen aus Getreide.

In einer besonders bevorzugten Ausführungsform umfasst bzw. besteht der Anteil krautiger Pflanzen zur Verwendung in einer erfindungsgemäßen Mischung bzw. in einer erfindungsgemäßen Mischung aus Getreideausputz.

In einer weiteren bevorzugten Ausführungsform umfasst der Anteil krautiger Pflanzen zur Herstellung einer erfindungsgemäßen Mischung bzw. in einer erfindungsgemäßen Mischung mindestens 70%,(w/w), mindestens 80%(w/w), mindestens 90%(w/w), bevorzugt mindestens 95%(w/w) besonders bevorzugt 100%(w/w) Pflanzenteile ausgesucht aus einer Gruppe bestehend aus Halmen, Blättern, Spelzen und Blüten.

In einer ganz besonders bevorzugten Ausführungsform ist der Anteil an Getreidekom in dem in die erfindungsgemäße Mischung eingesetzten Getreide bzw. Getreideausputz maximal 30%(w/w), bevorzugt maximal 20%(w/w), mehr bevorzugt maximal 15%(w/w) bezogen auf den Anteil krautiger Pflanzen. Diese Körner können als ganze Körner oder als Bruchkörner oder Mischungen davon vorliegen.

In einer bevorzugten Ausführungsform umfasst Getreide Getreidearten ausgewählt aus einer Gruppe bestehend aus Weizen, Dinkel, Roggen, Hafer, Gerste, Triticale und Mischungen daraus. In einer weiteren bevorzugten Ausführungsform umfasst der Ausdruck Getreide eine Getreideart ausgewählt aus einer Gruppe bestehend aus Weizen, Dinkel, Roggen, Gerste, Triticale und Hafer oder Mischungen daraus. In einer noch bevorzugteren Ausführungsform umfasst der Ausdruck Getreide eine Getreideart ausgewählt aus einer Gruppe bestehend aus Weizen, Roggen und Gerste oder Mischungen daraus. Bevorzugt handelt es sich bei den hier aufgezählten Getreidearten um Kulturpflanzen.

In einer bevorzugten Ausführungsform ist die Quelle der krautigen Pflanzen in der erfindungsgemäßen Mischung Getreide-Ausputz oder eine Mischung aus Getreide-Ausputz und Körnern (z. B. Bruchkom) von Getreidepflanzen. Die Körner können dabei von derselben Getreideart wie der Getreide-Ausputz oder von einer anderen Getreideart ausgewählt sein oder die Körner können eine Mischung von Körnern verschiedener Getreidearten sein.

In einer weiteren Ausführungsform umfasst der Anteil krautiger Pflanzen mindestens 80%(w/w), mindestens 90%(w/w), bevorzugt mindestens 95%(w/w) Kaps bezogen auf den Anteil krautiger Pflanzen in einer erfindungsgemäßen Mischung.

In einer bevorzugten Ausführungsform besteht der Raps aus Rapsausputz.

In einer ganz besonders bevorzugten Ausführungsform ist der Anteil an Raps samen in dem in die erfindungsgemäße Mischung eingesetzten Raps bzw. Rapsausputz maximal 5%(w/w), bevorzugt maximal 4%(w/w), mehr bevorzugt maximal 3%(w/w) bezogen auf den Anteil krautiger Pflanzen.

In einer Ausführungsform liegt der Anteil an anorganischen Verunreinigungen (z. B. Mineralstoffe, etwa wasserunlösliche Mineralstoffe wie SiO_{2,} Silikate wie Eisen- und Magnesium-Silikate, calciumreichem Feldspat) in Ausputz (z. B. Getreide- und/oder Raps-Ausputz) zur Verwendung in einer erfindungsgemäßen Mischung bei etwa 5% oder weniger, wie etwa 4%(w/w) oder weniger, etwa 3%(w/w) oder weniger, oder gar etwa 2%(w/w) oder weniger bezogen auf den Anteil des Ausputzes. In weiteren bevorzugten Ausführungsformen liegt der Anteil an anorganischen Verunreinigungen in Ausputz bei etwa 3%(w/w) oder weniger, oder bei etwa 2%(w/w) oder weniger bezogen auf den Anteil des Ausputzes. Der Fachmann kann durch einfache mechanische und/oder chemische Schritte und Analysen wasserunlösliche Mineralstoffen wie z. B. wasserunlösliches Siliciumdioxid oder wasserunlösliche Silikate oder wasserunlösliche Carbonate von pflanzlichen Schroten abtrennen und/oder analysieren. In einer Ausführungsform enthält eine erfindungsgemäße Mischung etwa 3,6%(w/w) oder weniger, etwa 3,4%(w/w) oder weniger, etwa 3%(w/w) oder weniger, etwa 2,8%(w/w) oder weniger, etwa 1%(w/w) oder weniger wasserunlösliches Siliciumdioxid oder wasserunlösliche Silikate oder wasserunlösliche Carbonate.

In einer Ausführungsform liegt der Anteil von Getreideresten in Getteide-Ausputz bzw. von Rapsresten in Raps-Ausputz bei etwa 80%(w/w) oder mehr, bei etwa 85%(w/w) oder mehr, bevorzugt bei etwa 90%(w/w) oder mehr oder bei etwa 95%(w/w) oder mehr bezogen auf den Anteil des Ausputzes. Besonders bevorzugt bei 98%(w/w) oder mehr wie 100%(ww). Weiterhin können sich in Getreide-Ausputz bzw. Rapsausputz jedoch auch Fremdpflanzenteile befinden. Dieser Fremdpflanzenteil liegt in der Regel bei etwa 20%(w/w) oder weniger, bei etwa 15%(w/w) oder weniger, bevorzugt bei etwa 10%(w/w) oder weniger oder etwa 5%(w/w) oder weniger bezogen auf den Anteil des Ausputzes. Im Allgemeinen bestehen die Frerndpflanzenanteile aus Teilen von anderen krautigen Pflanzen.

Weitere organische Bestandteile des krautigen Ptlanzenanteits neben Süßgräsern, bevorzugt Getreide, können z. B. Korbblütler, Kreuzblütengewächse, Nelkengewächse oder weitere Süßgräser sein. Beispiele für weitere Pflanzenanteile im Anteil krautiger Pflanzen sind Raps (Brassica napus), Ackerstiefmütterchen (Viola arvensis), Vogelmiere (Stellaria media), Ackerfuchsschwanz (Alopecurus myosuroides), Gemeiner Windhalm (Apera spica-venti), Flughafer (Avena fatua), Einjähriges Rispengras (Poa annua), Klettenlabkraut (Galium aparine), Ackerhohlzahn (Galeopsis terrahit), Windenknoterich (Fallopia convolvulus), geruchlose Kamille (Matricaria inodora bzw. Tripleurospermum inodorum) gewöhnlicher Feldrittersporn, kleine Wolfsmilch, Knollen-Platterbse, Acker-Steinsame, Finkensame, Acker-Hahnenfuß, gezähnter Feldsalat, Kornblume, Schmalblättrige Wickc, rauhaarige Wicke, gewöhnliches Hirtentäschel, weißer Gänsefuß, kleiner Storchschnabel, gewöhnliches Greiskraut, Gemüse-Gänsedistel, Vogelmiere, geruchlose Strandkamille und/oder Mischungen daraus.

Weitere Bestandteile an krautigen Pflanzen sind z. B. Samen, Körner, Halme, Blätter, Blüten, Früchte und Spelzen von krautigen Pflanzen sowie Mischungen derselben.

In einer bevorzugten Ausführungsform ist der Anteil an Halmen im Anteil krautiger Pflanzen zur Verwendung in einer erfindungsgemäßen Mischung bzw. in einer erfindungsgemäßen Mischung mindestens etwa 60%(w/w), mindestens etwa 70%(w/w) oder sogar mindestens etwa 80%(w/w) bezogen auf den Anteil krautiger Pflanzen.

In einer Ausführungsform beträgt der Heizwert des Anteils krautigen Pflanzen, der in eine erfindungsgemäße Mischung eingesetzt wird, 3,5 kWh/kg- 5 kWh/kg, 3,5 kWh/kg - 4,5 kWh/kg, 3,7 kWh/kg - 4,5 kWh/kg, 3,7 kWh/kg - 4,3 kWh/kg, oder 3,9 kWh/kg - 4,3 kWh/kg. Der Fachmann kann den Brennwert von Getreideausputz durch im Stand der Technik bekannte Methoden, z.B. DIN 51900, bestimmen.

In einer Ausführungsform beträgt der Wasseranteil des Anteils krautigen Pflanzen zur Verwendung in einer erfindungsgemäßen Mischung etwa 20%(w/w) oder weniger, bevorzugt etwa 18%(w/w) oder weniger, mehr bevorzugt etwa 15%(w/w) oder weniger, noch bevorzugter etwa 12%(w/w) oder weniger, wie zum Beispiel 11%(w/w) oder weniger, 10%(w/w) oder weniger oder sogar 9%(w/w) oder weniger bezogen auf den Anteil krautiger Pflanzen.

In einer Ausführungsform beträgt die Größe der Schrote der geschroteten krautigen Ptlanzen maximal 20000µm (20 mm), wie maximal 15900 µm, wie maximal 10000 µm, wie bevorzugt maximal 8000 µm, wie etwa maximal 5000 µm, wie maximal 3000 µm, besonders bevorzugt maximal 2750 µm, weiterhin bevorzugt maximal 2500 µm wie z. B. 2250 µm oder weniger oder gar 2000 µm oder weniger d.h. die Schrote passen durch ein Sieb mit einer Porengröße von 20000 µm, 15000 µm, 10000 µm, 8000 µm, 5000 µm, 2750 µm, 2500 µm, 2250 µm bzw. 2000 µm In weiteren bevorzugten Ausführungsformen beträgt die Größe der Schrote zwischen 2750 µm und 10 µm, zwischen 2500 µm und 150 µm, oder zwischen 2250 µm und 300 µm. Dem Fachmann ist klar, dass Schrote mindestens in zwei Dimensionen die oben angegebenen maximalen Längen aufweisen müssen um durch die entsprechenden Sieböffnungen zu passen. In einer dritten Dimension können Schrote entsprechend länger sein wie z. B. 125%, 150% oder 200% der Sieblochdurchmesser. Bevorzugt entsprechen die Längen der Schrote jedoch in allen drei Dimensionen den oben angegebenen Werten.

In einer weiteren Ausführungsform der vorliegenden Erfindung beträgt der Stickstoffanteil der krautigen Pflanzen des Anteils krautiger Pflanzen an einer erfindungsgemäßen Mischung mindestens 0,6%(w/w), mindestens 0,8%(w/w), bevorzugt mindestens 1%(w/w), mindestens 1,2%(w/w) oder sogar mindestens 1,4%(w/w) bezogen auf den Anteil krautiger Pflanzen, der in eine erfindungsgemäße Mischung eingesetzt wird.

In einer weiteren Ausführungsform beträgt der Ligninanteil der krautigen Pflanzen zur Verwendung in einer erfindungsgemäßen Mischung bzw. in einer erfindungsgemäßen Mischung maximal 20%(w/w),maximal 18%(w/w), bevorzugt maximal 16%(w/w) bezogen auf den Anteil krautiger Pflanzen, der in eine erfindungsgemäße Mischung eingesetzt wird.

### Öl/Holz

Ohne an die folgenden Erklärungen gebunden zu sein wird davon ausgegangen, dass der Zusatz von Pflanzenöl in der erfindungsgemäßen Mischung zu einer erhöhten Verbrennungstemperatur und zu einer verbesserte Nachverbrennung des krautigen Pflanzenmaterials führt. Für eine effektive Verbrennung eines Gemisches ist es wichtig, dass dic Asche Fliestemperatur erreicht und nicht lediglich in Halbkugeltemperatur verbleiben. Bei der Nachverbrennung entzünden sich die Abgase inklusive der Asche/Schlacke nach dem eigentlichen Verbrennungsvorgang in einem Ofen nach Zugabe von O₂ erneut bzw. verbrennen länger. Die Erhöhung der Verbrennungstemperatur sorgt nicht nur für eine hessere Granulierung der bei der Verbrennung entstehenden Schlacke sondern führt auch zu einem verringerten Rußanteil. Zudem wird durch den oben beschriebenen Zusatz an Holzmehl die Verschlackung der bei der Verbrennung entstehenden Asche zusätzlich verringert.

In einer bevorzugten Ausführungsform besteht das Öl zur Verwendung in einer erfindungsgemäßen Mischung bzw. in einer erfindungsgemäßen Mischung aus Pflanzenöl,

In einer Ausführungsform besteht das Pflanzenöl zur Verwendung in einer erfindungsgemäßen Mischung bzw. in einer erfindungsgemäßen Mischung mindestens 1%, mindestens 5 %, mindestens 10%, mindestens zu 30% (w/w), mindestens zu 50%(w/w), mindestens zu 70%(w/w), mindestens zu 90%(w/w) bevorzugt mindestens zu 98%(w/w) aus Fett (z. B. Kokosfett oder Palmfett).

In einer weiteren bevorzugten Ausführungsform wird Pflanzenöl, das in eine erfindungsgemäße Mischung eingebracht wird in Form "reinem" Pflanzenöls oder in Form von Pflanzenöl-enthaltende, flüssige oder feste Mischungen eingebracht in denen der Anteil an Pflanzenöl bei mindestens 30% (w/w), mindestens 50%(w/w), mindestens 70%(w/w), mindestens 90%(w/w) bevorzugt mindestens 98%(w/w) liegt. Weiter Bestandteile von reinen Pflanzenölen können z. B. Geschmacksstoffe, Farbstoffe und Pftanzenschwebestoffe im Öl (wie z. B. Pflanzenzellen, Verbände von Pflanzenzellen und/oder Zellfragmente) sein. Pflanzenschwebestoffe, Farbstoffe, Geschmacksstoffe etc. können auch in Pflanzenöl-enthaltenden, flüssigen oder festen Mischungen vorliegen. Solche feste Mischungen sind z. B. ölhaltiger Rapskuchen oder (zerkleinerte) Nüsse (mit oder ohne Schalen). Bevorzugt sind Öle aus Sonnenblumen, Raps, Erdnuss, Walnuss, Haselnuss, Mandel, Mais, Olive, Soja, Palme, Sesam, Cocos, Leinsam, Leindotter oder Ölmischungcn enthaltend mindestens 20% einer der vorherigen aufgezählten Öle. Der Ölgehalt solcher Pflanzenöl-enthaltenden Mischungen kann durch den Fachmann mit Methoden, die im Stand der Technik bekannt sind, bestimmt werden so dass die Pflanzenöl-enthaltenden Mischungen

In einer weiteren bevorzugten Ausführungsform umfasst der Ausdruck "Pflanzenöl" mindestens 50%(w/w), mindestens 70%(w/w), mindestens 90%(w/w) bevorzugt mindestens 98%(w/w) ein Pflanzenöl oder Pflanzenölmischung ausgewählt aus der Gruppe bestehend aus Sonnenblumenöl, Olivenöl, Palmöl, Cocosöl, Erdnussöl, Haselnussöl, Walnussöl, Mandelöl, Sonnenblumenöl, Maisöl, Rapsöl oder Mischungen daraus. Besonders bevorzugt ist Rapsöl und Nussöl (z. B. Haselnussöl oder Walnussöl) bzw. Nussölmischungen; oder "Pflanzenöl" besteht aus den oben aufgezählten Ölen bzw. Mischungen. Somit richtet sich eine Ausführungsform auf Mischungen in denen der Anteil an Öl in dieser erfindungsgemäßen Mischung aus Pflanzenöl bestehend aus oder umfassend Rapsöl und/oder Nussöl bzw. Nussölmischungen besteht. Rapsöl,Haselnussöl, Walnussöl kann z. B. in Form von Öl, bevorzugt mit einer Reinheit von über 80%, 95%, 98% oder 99%, eingesetzt werden oder in Form von Rapskuchen bzw. Nusskernen, z. B. in gemahlener oder gehackter Form, wobei jedoch die Menge an Öl in dem der erfindungsgemäßen Mischung zugesetzten Rapskuchen bzw. Nusskernen oder anderen Darreichungsformen jeweils ausreichend sein muss, um einen Gesamtölanteil in einer erfindungsgemäßen Mischung von etwa 3% bis 8% zu erreichen. Der Gehalt von Rapsöl in Rapskuchen bzw. von Nussöl in Nusskernen kann mit Verfahren, die im Stand der Technik bekannt sind, z. B. ein Extrahierungsverfahren wobei mit Waschbenzin Rapsöl aus Rapskuchen oder Nusskernen extrahiert wird und die Bestimmung des Ölgewichtes nach Abdampfen des Waschbenzins durch wiegen erfolgt, bestimmt werden. Der weitere Bestandteil des Rapskuchens (z. B. zerkleinerte Rapssamen, - halme, -blüten, -blätter) ist im Sinn der vorliegenden Ertindung Teil der krautigen (Fremd)pflanzen.

Neben krautigen Pflanzen, Holz und Pflanzenöl kann eine erfindungsgemäße Mischung bis zu 25%(w/w) weitere Zusätze enthalten. Dies können mineralische Verunreinigungen wie Siliziumdioxid und andere Mineralstoffe oder Mischung von Mineralstoffen sein oder andere organische Zusätze wie tierische Beimengungen (z. B. Insekten, Kleintiere etc.), nicht verholzte Pflanzenteile von holzhaltigen Büschen oder Bäumen wie z. B. Blätter, Blüten, Früchte, Samen, Nüsse oder Nussschalen. Bevorzugt liegt der Anteil derartiger Zusätze unter 20%(w/w), mehr bevorzugt unter 15 %(w/w), besonders bevorzugt unter 10%(w/w) wie z. B. unter 5%(w/w) oder unter 4%(w/w). Der Anteil an tierischen Zusätzen/Verunreinigungen (mit Ausnahme von Mischungen in denen das Öl in einer erfindungsgemäßen Mischung aus tierischem Öl besteht) beträgt gewöhnlicher Weise 3%(w/w) oder weniger, 2%(w/w) oder weniger oder sogar 1%(w/w) oder weniger bezogen auf das Gesamtgewicht einer erfindungsgemäßen Mischung. Idealerweise befinden sich keine tierischen Verunreinigungen in einer erfinsungsgemäßen Mischung.

Die Hauptbestandteile von verschiedenen Pflanzenölen sind im Folgenden näher beschrieben. Dem Fachmann sind Methoden zur Analyse von Pflanzenölzusammensetzungen aus dem Stand der Technik bekannt. Aus biologischen Gründen (z. B. Umweltfaktoren, Sorten, Erntezeit) können die Anteile der einzelnen Ölsäuten in einem Ptlanzenöl um bis zu 30% (w/w) schwanken:

Rapsöl: Ölsäure (bis zu 60% (w/w)), Linolsäure, Linolensäure, Palmitinsäure.

Olivenöl: Ölsäure (bis zu 80% (w/w)), Palmitinsäure, Linolsäure, Stearinsäure.

Kokosfett: Laurinsäure (bis zu 50% (w/w)), Myristinsäure, Palmitinsäure, Ölsäure.

Sonnenblumenöl: Linolsäure (bis zu 60% (w/w)), Ölsäure, Palmitinsäure, Stearinsäure.

Palmöl: Palitinsäure (bis zu 45% (w/w)), Ölsäure, Linolsäure, Stearinsäure.

Erdnussöl: Ölsäure (bis zu 70% (w/w)), Linolsäure, Palitinsäure, Stearinsäure, Behensäure.

Walnussöl: Linolsäure (bis zu 85% (w/w)), Ölsäure, Linolensäure.

Haselnussöl: Ölsäure (bis zu 70% (w/w)), Palmitinsäure, Linolsäure, Stearinsäure.

In einer Ausführungsform beträgt der Brennwert des Pflanzenöls zur Verwendung in einer erfindungsgemäßen Mischung 3900 kJ oder weniger, bevorzugt zwischen etwa 3900 kJ und 3000 kJ oder zwischen etwa 3800 kJ und 3000 kJ.

In einer Ausführungsform beträgt der Anteil an Pflanzenöl in einer erfindungsgemäßen Mischung zwischen etwa 3%(w/w) und 8%(w/w), besonders bevorzugt zwischen etwa 3%(w/w) und 6%(w/w) Pflanzenöl bezogen auf das Gesamtgewicht der Mischung. In einer bevorzugten Ausführungsform beträgt der Anteil an Pflanzenöl in einer erfindungsgemäßen Mischung zwischen etwa 3%(w/w) und 5.5%(w/w) oder gar zwischen etwa 3%(w/w) und 5%(w/w).

In erfindungsgemäßen Zusammensetzungen wird Holz mit einem Brennwert von mindestens 2,0 kWh/kg, bevorzugt 3,0 kWh/kg, mehr bevorzugt mindestens 3,5 kWh/kg wie z. B. mindestens 3,8 kWh/kg, genutzt. Beispiele für Holzarten (Bäume) und durchschnittliche Brennwerte in KWh /kg sind: Eichenholz (Eiche) 4,2; Buchenholz (Buche) 4,0; Robinienholz (Robinie) 4,1; Eschenholz (Esche) 4,1; Kastanienholz (Kastanie) 4,2; Ahornholz (Ahorn) 4,1; Birkenholz (Birke) 4,3; Platanenholz (Platane) 4,2; Ulmenholz (Ulme) 4,1; Kirschholz (Kirsche) 4,3; Lärchenholz (Lärche) 4,4; Kiefernholz (Kiefer) 4,4; Douglasienholz (Douglasie) 4,4; Erlenholz (Erle) 4,1; Lindenholz (Linde) 4,2; Fichtenholz (Fichte) 4,5; Tannenholz (Tanne) 4,4; Weidenholz (Weide) 4,1; Pappelholz (Pappel) 4,1.

In einer Ausführüngsform besteht das Holz zur Verwendung in einer erfindungsgemäßen Mischung (Brennstoffmischung) zu mindestens 80%, bevorzugt zu mindestens 90% mehr bevorzugt zu mindestens 95% aus Holz ausgewählt aus einer Gruppe bestehend aus Holz von Douglasie (Pseudotsuga), Goldlärche (Pseudolarix amabilis), Hemlocktanne (Tsuga), Kiefer/Föhre (Pinus), Lärche (Larix), Lebensbaum (Thuja), Mammutbaum (Sequoioideae) (Chamaecyparis), Sicheltanne (Cryptomeria), Tanne (Abies), Zeder (Cedrus), Zypresse (Cupressus), Ahorn (Acer), Erle (Alnus), Birke (Betula), Hainbuche (Carpinus), Weißdom (Crataegus), Ulme (Ulmus), Buche (Fagus). Esche (Fraxinus), Stechpalme (Hex), Äpfel (Malus), Pappel (Populus), Steinobstbäume (Prunus), Birne (Pyrus), Eiche (Quercus), Weide (Salix), Mehlbeere (Sorbus), Linde (Tilia), Robinie (Robinia), Kastanien (Castanea), Platane (Platanus), Ulme (Ulmus), oder Mischungen daraus besteht.

In einer Ausführungsform wird das Holz in Form von Hackschnitzeln und/oder in Form von Holzmehl zugesetzt. Hackschnitzel und Holzmehl fallen z. B. bei Grünrückschnitt und in der Holzindustrie in großen Mengen an z. B. als Abfallprodukt in Sägewerken. Holzmehl aus Sägewerken in Form von Siebresten haben kaum noch Anwendungsmöglichkeiten aufgrund des zumeist hohen mineralischen Anteils (ca. 5%-6% in diesem Holzmehl). Hackschnitzel im Sinne der vorliegenden Erfindung sind z. B. Hackschnitzel gemäß Europäische Norm EN 14961. In einer bevorzugten Ausführungsform beträgt die maximale Korngröße von mindestens 90% eingesetzter Hackschnitzeln 100 mm oder weniger, bevorzugt 70 mm oder weniger, mehr bevorzugt 60 mm oder weniger wie z. B. maximal 55 mm oder weniger wie zwischen 5 mm und 50 mm, wie zwischen 10 mm und 50 mm, oder wie zwischen 20 mm und 50 mm, oder bevorzugt wie zwischen 30 mm und 50 mm. Es ist bevorzugt, wenn alle Hackschitzel eine maximale Korngröße von 100 mm oder weniger aufweisen. Bevorzugt weisen Hackschnitzel im Sinn der vorliegenden Erfindung nicht nur in 2 sondern in 3 Dimensionen eine maximale Größe von 100 mm oder weniger bevorzugt 70 mm oder weniger, mehr bevorzugt 60 mm oder weniger wie z. B. maximal 55 mm oder weniger wie zwischen 5 mm und 50 mm, wie zwischen 10 mm und 50 mm, oder wie zwischen 20 mm und 50 mm, oder bevorzugt wic zwischen 30 mm und 50 mm. auf, d. h. die Komgröße definiert nicht zur zwei sondern alle drei Dimensionen eines Holzhackschitzels. Holzmehl besteht bevorzugt aus Holzstücken, die eine Größe von 5 mm oder kleiner haben, in anderen Worten, das Holzmehl besteht aus Holzstücken, die durch ein Sieb mit einer Maschenweite von 5 mm passen (Siebporen sind 5 mm groß). In einer Ausführungsform besteht das Holzmehl aus Holzstücken bei denen die maximalen Kantenlängen der Teilchen in allen drei Dimensionen (Länge, Breite, Höhe) 5 mm oder kleiner sind. In weiteren bevorzugten Ausführungsformen besteht das Holzmehl aus Holzstücken, die eine Größe von 4 mm oder kleiner haben (die Holzstücken können ein Sieb mit einer Maschenweite von 4 mm passieren. In einer weiteren bevorzugten Ausführungsform besteht das Holzmeh aus Holzstücken von denen mindestens 80% (w/w), bevorzugt 95% (w/w), mehr bevorzugt 98% (w/w) oder gar 100% (w/w) maximale Kantenlängen in allen drei Dimensionen (Länge, Breite, Höhe) von mm oder kleiner, 3 mm oder kleiner, 2 mm oder kleiner 500 µm oder kleiner, oder 100 µm oder kleiner aufweisen. Dem Fachmann ist klar, dass Holzstückc nicht generell kubischen Formen mit definierten Kanten aufweisen, jedoch ist dem Fachmann bekannt, dass jede Form in ein dreidimensionales Koordinatensystem gesetzt werden kann wobei die längste Ausrichtung dieser Form auf einer der drei Achsen (Länge, Breite und Höhe) liegt und so die "Achsen" einer jeden Form bestimmt werden können, In einer weiteren Ausführungsform besteht das Holzmehl aus Holzstücken von denen mindestens 80% (w/w), bevorzugt 95% (w/w), mehr bevorzugt 98% (w/w) oder gar 100% (w/w) maximale Kantenlängen in allen drei Dimensionen (Länge, Breite, Höhe) von 5 mm oder kleiner, 4 mm oder kleiner, oder gar 3 mm oder kleiner aufweisen und mindestens 80% (w/w), minimale Kantenlängen in allen drei Dimensionen (Länge, Breite, Höhe) von 50µm, 100 µm, 200 µm oder 400µm aufweisen.

In einer Ausführungsform umfasst das Holz zur Verwendung in einer erfindungsgemäßen Mischung vorzugsweise aus Holz von Nadelbäumen (verholzte nacktsamige Pflanzen deren Samenanlagen nicht durch Fruchtblätter geschützt.sind). Beispiele für Nadelbäume sind Douglasie (Pseudotsuga), Fichte (Picea), Goldlärche (Pseudolarix amabilis), Hemlocktanne (Tsuga), Kiefer/Föhre (Pinus), Lärche (Larix), Lebensbaum (Thuja), Mammutbaum (Sequoioideae) (Chamaecyparis), Sicheltanne (Cryptomeria), Tanne (Abies), Zeder (Cedrus), Zypresse (Cupressus). Bevorzugte Nadelbäume sind Douglasie, Tanne, Fichte, Lärche, Zeder.

In einer weiteren Ausführungsform umfasst das Holz vorzugsweise aus Holz von Laubbäumen (Verholzte Pflanzen der Bedecktsamer). Beispiele für Laubhäume sind Ahorn (Acer), Erle (Alnus), Birke (Betula), Hainbuche (Carpinus), Weißdorn (Crataegus), Ulme (Ulmus), Buche (Fagus), Esche (Fraxinus), Stechpalme (Ilex), Äpfel (Malus), Pappel (Populus), Steinobstbäume (Prunus), Birne (Pyrus). Eiche (Quercus), Weide (Salix), Mehlbeere (Sorbus), Linde (Tilia), Robinie (Robinia), Kastanien (Castanea), Platane (Platanus) und Ulme (Ulmus). Bevorzugte Laubbäume sind Eiche Birke, Buche, Esche, Kirsche Weide, Kastanie, Ulme, Linde.

In einer bevorzugten Ausführungsform besteht Holz zur Verwendung in einer erfindungsgemäßen Mischung aus Holz von Nadelbäumen, Holz von Laubbäumen oder Mischungen aus Holz von Nadel- und/oder Laubbäumen. Üblicherweise als Büsche bezeichnete verholzte Pflanzen fallen je nach iherer Einstufung als Bedecktsamer oder Nacktsamer unter die Kategorie Laubbaum oder Nadelbaum.

In einer Ausführungsform beträgt der Ligningehalt von Holz, das in erfindungsgemäße Mischungen eingesetzt wird, mindestens 22%(w/w), bevorzugt mindestens 25%(w/w) oder gar 27%(w/w) des Holzes. In anderen Worten, der Ligningehalt von Holz in einer erfindungsgemäßen Mischung beträgt mindestens 22%(w/w), bevorzugt mindestens 25%(w/w) oder gar 27%(w/w) des Holzanteils in der Mischung.

In einer weiteren Ausfuhrungsform beträgt der Stickstoffgehalt von Holz, das in erfindungsgemäße Mischungen eingesetzt wird, maximal 0,55%(w/w) des Holzes, bevorzugt maximal 0,5%(w/w) des Holzes oder gar 0,48%(w/w) des Holzes. In anderen Worten, der Stickstoffgehalt von Holz in einer erfindungsgemäßen Mischung beträgt maximal 0,55%(w/w), bevorzugt maximal 0.5%(w/w) oder gar 0,48%(w/w) des Holzanteils in der Mischung.

In einer Ausführungsform beträgt der Anteil an Holz, bevorzugt Holzmehl oder Hackschnitzel oder eine Mischung daraus, in der erfindungsgemäßen Mischung zwischen etwa 7%(w/w) und 20%(w/w), wie z. B. zwischen etwa 7%(w/w) und 18%(w/w), zwischen etwa 8%(w/w) und 16%(w/w), bevorzugt zwischen etwa 8%(w/w) und 14%(w/w), wie zwischen etwa 10%(w/w) und 12%(w/w).

Der Wassergehalt von Holz zur Verwendung in einer erfindungsgemäßen Mischung bzw. in einer erfindungsgemäßen Mischung sollte nicht höher als 25%(w/w), bevorzugt nicht höher als 22%(w/w), besonders bevorzugt nicht höher als 20%(w/w) sein. In einer bevorzugten Ausführungsform liegt der Wassergehalt zwischen 10%(w/w) und 20%(w/w), wie z. B: zwischen 12%(w/w) und 18%(w/w).

In einer weiteren Ausführungsform liegt der Wassergehalt bestimmt nach DIN51718 einer erfindungsgemäßen Mischung unter 35% wie z. B. zwischen etwa 5% und 30%, zwischen etwa 5%(w/w) und 24%(w/w), bevorzugt zwischen etwa 7%(w/w) und 20%(w/w), besonders bevorzugt zwischen etwa 3%(w/w) und 19%(w/w), wie z. B. zwischen 8%(w/w) und 18%(w/w) oder zwischen 12%(w/w) und 18%(w/w).

In einer Ausführungsform der vorliegenden Erfindung besteht die Brennstoffmischung aus 65%(w/w) bis 90%(w/w) krautige Pflanzen; 3%(w/w) bis 8%(w/w) eines Mineralöls oder Pflanzenöl, bevorzugt umfassend mindestens 20% eines Pflanzenöls ausgewählt aus einer Gruppe bestehend aus Rapsöl, Olivenöl, Kokosöl, Sonnenblumenöl, Palmöl. Erdnussöl, Walnussöl, Haselnussöl, Mandelöl, Maisöl oder Mischungen daraus; und 7%(w/w) bis 27%(w/w) Holz, bevorzugt in Form von Holzmehl und/oder Hackschnitzeln.

In einer weiteren Ausführungsform der vorliegenden Erfindung besteht die Brennstoffmischung aus 65%(w/w) bis 90%(w/w) geschroteten krautige Pflanzen, 3%(w/w) bis 8%(w/w) Pflanzenöl, und 7%(w/w) bis 27%(w/w) Holz, bevorzugt mit einer Körnergröße von maximal 10 cm, besonders bevorzugt mit einer Körnergröße von maximal 5 cm.

In einer weiteren Ausführungsform umfasst die Brennstoffmischung 65%(w/w) bis 90%(w/w) krautige Pflanzen, 3%(w/w) bis 8%(w/w) Pflanzenöl, 7%(w/w) bis 27%(w/w) Holz, bevorzugt in Form von Holzmehl und/oder Hackschnitzeln, und 0%(w/w) bis etwa 3%(w/w) einer alkalischen Komponente wie Brandkalk, bevorzugt 1%(w/w) bis 5%(w/w) einer alkalischen Komponente wie Brandkalk.

In einer weiteren Ausführungsform umfasst die Brennstoffmischung 65%(w/w) bis 89%(w/w) krautige Pflanzen, 3%(w/w) bis 8%(w/w) Pflanzenöl, 7%(w/w) bis 27%(w/w) Holz, bevorzugt in Form von Holzmehl und/oder Hackschnitzeln, und 1%(w/w) bis etwa 5%(w/w) einer alkalischen Komponente wie Brandkalk.

Besonders bevorzugte Brennstoffmischungen enthalten Pflanzenöle oder Mischungen mit Pflanzenöl enthaltend mindestens ein Pflanzenöl ausgewählt aus einer Gruppe bestehend aus Rapsöl, Nussöl (bevorzugt Walnussöl und Haselnussöl), Mandelöl und Mischungen daraus.

Weiterhin besonders bevorzugt sind Brennstoffmischung mit Pflanzenöl wobei das Pflanzenöl mindestens 50% Pflanzenöl ausgewählt aus einer Gruppe bestehend aus Rapsöl, Sonnenblumenöl, Nussöl oder Mandelöl enthält, bevorzugt wobei das Pflanzenöl mindestens 50% Pflanzenöl ausgewählt aus einer Gruppe bestehend aus Rapsöl, Walnussöl, Haselnussöl, Mandelöl oder Mischungen daraus enthält, besonders bevorzugt wobei das Pflanzenöl mindestens 50% Pflanzenöl ausgewählt aus einer Gruppe bestehend aus Walnussöl, Haselnussöl. Mandelöl oder Mischungen daraus enthält.

In einer Austührungsform beträgt die Dichte bestimmt nach DIN 52182 von Pellets einer erfindungsgemäßen Mischung mindestens 600 kg/m³ wie z. B. 700 kg/m³ oder 750 kg/m³. In einer siehe Beispielbevorzugten Ausführungsform liegt die Dichte dieser Pellets zwischen 700 kg/m³

In einer weiteren Ausführungsform betragt die Ascheanteil nach Verbrennen gemäß DIN 51 719 einer erfindungsgemäßen Mischung zwischen 3%(w/w) und 8%(w/w), bevorzugt zwischen 3%(w/w) und 6%(w/w) bezogen auf das Gewicht der erfindungsgemäßen Mischung vor der Verbrennung. Besonders bevorzugt liegt der Aschegehalt zwischen 3,5%(w/w) und 5%(w/w).

In einer weiteren Ausführungsform liegt der untere Heizwert bestimmt nach DIN 51900 einer erfindungsgemäßen Mischung zwischen 15000 J/g und 22000 J/g, bevorzugt zwischen 16000 J/g und 22000 J/g wie z. B. zwischen 16000 J/g und 21000 J/g oder 17000 J/g und 21000 J/g.

In noch einer weiteren Ausführungsform liegt die Erweichungstemperatur bestimmt nach DIN 5 730 einer erfindungsgemäßen Mischung bei 950 °C oder mehr, bevorzugt bei 1000 °C oder mehr, mehr bevorzugt bei 1020 °C oder mehr. In einer bevorzugten Ausführungsform liegt die Erweichungstemperatur zwischen 950 °C und 1100 °C wie z. B. zwischen 1000 °C und 1100 °C.

In einer weiteren Ausführungsform liegt die Sphärischtemperatur bestimmt nach DIN 51 730 einer erfindungsgemäßen Mischung bei 1000 °C oder mehr wie 1050 °C oder mehr, bevorzugt bei 1060 °C oder mehr. In einer bevorzugten Ausführungsform liegt die Sphärischtemperatur zwischen 1050 °C und 1150 °C oder zwischen 1060 °C und 1140 °C.

In noch einer weiteren Ausführungsform liegt die Halbkugeltemperatur bestimmt nach DIN 51 730 einer erfindungsgemäßen Mischung bei 1000°C oder mehr, bevorzugt bei 1050 °C oder mehr, mehr bevorzugt bei 1100 °C oder mehr wie z. B. zwischen 1100°C und 1200 °C.

In einer weiteren Ausführungsform liegt die Fließtemperatur bestimmt nach DIN 51 730 einer erfindungsgemäßen Mischung bei 1100 °C oder mehr, bevorzugt bei 1150 °C oder mehr, mehr bevorzugt bei 1200 °C oder mehr wie z. B. zwischen 1200 °C und 1400 °C oder zwischen 1200 °C und 1350 °C.

In einer weiteren Ausführungsform ist die Summe der %(w/w) aus krautigen Pflanzen, Öl und Holz in einer erfindungsgemäßen Mischung mindestens 75%, mindestens 80%, mindestens 85%, bevorzugt mindestens 90% wie etwas mindestens 95%, mindestens 98% oder mindestens 100%.

### CaO

Wenn der Anteil an krautigen Pflanzenmaterial z. B. aus Getreide-Ausputz besteht oder der Anteil an krautigen Pflanzenmaterial zum überwiegenden Teil von Kultursüßgräsern wie Kulturgetreide stammt kann es sein, dass in einem Kulturanbau eingesetzte Pestizide wie Insektizide, Herbizide oder Fungizide bei der Verbrennung des krautigen Pflanzenmaterials zu einem erhöhten Säureanteil in den Verbrennungsprodukten führen. Zumeist handelt es sich dabei um anorganische Säuren wie Halogenwasserstoffe (z.B. HCl, HBr, HF oder HI), schwefelhaltige Säuren (Schwefelsäure, schweflige Säure etc.) oder stickstoffhaltige Säuren (Salpetersäure, salpetrige Säure etc.), es können sich jedoch auch aliphatische oder aromatische organische Säuren, z. B. mit (C₁-C₈) Kohlenstoffatomen, bilden. Aus diesem Grund kann der erfindungsgemäßen Mischung eine alkalische Komponente, bevorzugt eine anorganische alkalische Komponente, zugesetzt werden. Eine bevorzugte alkalische Komponente ist Brandkalk (CaO). Entsprechend richtet sich eine Ausführungsform der vorliegenden Erfindung auch auf eine erfindungsgemäße Mischung, die zusätzlich etwa 1 %(w/w) bis etwa 5%(w/w), bevorzugt 2%(w/w) bis 5%(w/w) wie z. B. 2%(w/w) bis 4%(w/w) einer alkalischen Komponente, bevorzugt Brandkalk, enthält.

### Form

Die erfindungsgemäße Mischung ist unter Standardbedingungen (25 °C, 1013 hPa) üherwiegend fest. Sie kann in Form einer amorphen Masse vorliegen (= Mischung aus geschroteten krautigen Pflanzen, Holzmehl und/oder Hackschnitzel) und Pflanzenöls = lose Form) oder, als Brikett oder Pellet, d.h. in gepresster, fester Form.

Das Verfahren der Pelletierung wird in der Verfahrenstechnik der Agglomeration zugeordnet. Zweck ist eine Verbesserung des Umgangs mit dem pelletierten Material, z. B. durch Erhöhen der Dichte, Vermeidung von Staub und/oder Verbesserung der Dosierbarkeit. Rohmaterial(ien) wird zerkleinert und durch eine Matrize, z. B. eine Flachmatrizenpresse, gepresst. Dadurch wird das Material verdichtet. Pellets werden im Allgemeinen trocken hergestellt.

Generell besitzen Pellets im Sinn der vorliegenden Erfindung einen Durchmesser von 20 cm oder weniger wie etwa. 15 cm oder weniger oder 12 cm oder weniger wie z. B. 10 cm oder weniger oder 8 cm oder weniger. Die Länge von Pellets beträgt in der Regel 50 cm oder weniger, 40 cm oder weniger oder sogar 25 cm oder weniger, wie z. B. 10 cm oder weniger oder 8 cm oder weniger.

Die Herstellung von Pellets oder Briketts aus erfindungsgemäßer Mischung kann nach jedem dem Fachmann bekannten Verfahren zur Erzeugung von Biomassepellets wie Holzpellets oder Pellets aus Getreideausputz hergestellt werden.

### Herstellung

Die Herstellung des erfindungsgemäßen Brennstoffes erfolgt meistens durch Zerkleinem, z.B. Schroten oder Zennahlen, von krautigen Pflanzen und Zerkleinern von Holz, mechanisches Mischen der beiden Komponenten mit Pflanzenöl und, optional, Pressen der Brennstoffmischung z.B. durch eine mechanische Brikettpresse bekannt aus Holzbrikettierungsverfahren.

### Verwendung

Ein Aspekt der vorliegenden Erfindung bezieht sich auf die Verwendung einer erfindungsgemäßen Mischung als Brennstoff. Eine erfindungsgemäße Mischung kann z. B. in Blockheizkraftwerken verwendet werden.

Die folgenden Experimente zeigen, ohne limitierend zu sein einige Ausführungsformen der vorliegen Erfindung:

### Experimente

### Experiment 1

Pellets bestehend aus 85%(w/w) geschrotetem Getreideausputz (Weizenausputz und Gersteausputz im Verhältnis 50:50), 5%(w/w) Rapsöl und 109%(w/w) Holzmehl (Teilchengröße bis 3 mm) wurde analysiert.

| Fester Biobrennstoff | Prüfungsparameter | Methode | Ergebnis | Einheit |
|---|---|---|---|---|
| | Länge | | 62,4 | mm |
| | Durchmesser | | 54,4 | mm |
| | Rohdichte | DIN 52 182 | 860 | kg/m³ |
| | Wassergehalt (gesamt) | DIN 51 718 | 11,7 | % |
| | Oxidasche | DIN 51 719 | 4,15 | % |
| | Heizwert, unterer | DIN 51900 | 19475 | J/g |
| | Stickstoffgehalt | DIN 732 | 2,17 | % |
| | Erweichungstemperatur | DIN 51 730 | 1050 | °C |
| | Sphärischtemperatur | DIN 51 730 | 1110 | °C |
| | Halbkugeltemperatur | DIN 51 730 | 1150 | °C |
| | Fließtemperatur | DIN 51 730 | 1280 | °C |

Typische Werte für Biobrennstoffe (Dichte (p), Wassergehalt (WG), Heizwert (HW) und Aschegehalt (AG) sind u. a. unter http://bioenergie-demmel.com/index.php?mod=detail&id=5 zu finden:

| | |
|---|---|
| Holzhackschnitzel | (p: 220 kg/m³ WG: 20 % HW: 4,0 kWh/kg (14400 J/g) AG: 1,0), |
| Holzpellets | (p: 650 kg/m³ WG: 8 % HW: 4,9 kWh/kg (17640 J/g) AG: 0,5 %), |
| Heupellets | (p: 720 kg/m³ WG: 7 % HW: 4,2 kWh/kg (15120 J/g) AG: 5,5 %). |
| Strohpellets | (p: 720 kg/m³ WG: 7 % HW: 4,4 kWh/kg (15340 J/g) AG 5,5 %), |
| Rapskuchenpellets | (p: 580 kg/m³ WG: 13 % HW: 5,1 kWh/kg (18360 J/g) AG: 5,6 %), |
| Gerreideausputz | (p: 280 kg/m³ WG: 10 % HW: 4,1 kWh/kg (14760 J/g) AG: 3,1 %), |
| Triticale & Weizen | (p: 700 kg/m³ WG: 6,2 % HW: 4,5 kWh/kg (16200 J/g) AG: 3,2%). |

Umrechnung kWh in kJ: 1 kWh = 3600 J.

### Experiment 2

Verbrennungseigenschaften eines erfindungsgemäßen Brennstoffes aus 86% Getreideausputz, 10% Mischholz, 4% Nussöl (Haelsnuss und Erdnuss) wurden bei sieben (7) Tagen Dauerbetrieb einer Versuchsanlage der Stufenrost-Baureihe mit 700 kW thermischer Leistung und aufgesetztem Warmwasserkessel mit pneumatischer Kesselabreinigung (SRT 700) getestet.

Der Brennstoff wurde mittels Förder- und Dosierschnecken in den Direkteinschub der Anlage befördert und von dort diskontinuierlich in die Brennkammer der Anlage geschoben. In der Brennkammer wurde der Brennstoff durch die alternierende Vor- und Rückbewegung der beiden Rostwagen von der Aufgabestelle in Richtung Rostende gefördert. Der ausgebrannte Brennstoff fiel am Ende der Rosttläche in einen Entaschungskanal und wurde über ein Schneckenfördersystem in einen Aschebehälter gefördert. Die benötigte Luftmenge, um die Verbrennung zu gewährleisten, wurde über die Zonen unterhalb des Rostes, mittels Primärluftgebläse, eingeblasen. Um eine gestufte Verbrennung sicher zu stellen wurde in der Sekundärzone über das Sekundärluftgebläse Sekundärluft zugegeben. Die bei der Verbrennung entstehend Rauschgase wurden durch den Warmwasserkessel und einen Multizyklonabscheider (MZA) über ein Saugzuggebläse abgesaugt.

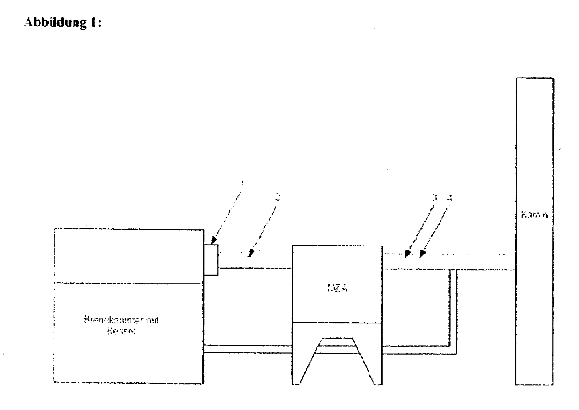

Für die Erfassung der Emissionen und der Staubgehalte des Roh- und des Reingases wurden vier Messstellen vorgesehen. In Abbildung 1 ist die Anordnung der Brennkammer, des Multizyklonabscheiders für die Rauchgasreinigung (MZA) und die vier Messstellen (1, 2, 3, 4) schematisch dargestellt. Die Messstelle für den Restsauerstoffgehalt feucht im Abgas ist direkt am Kesselaustritt (1) und die für den Restsauerstoffgehalt trocken zwischen dem MZA und dem Abzweig des rezirkulierten Rauchgases (4) vorgesehen. Die Entnahmesteile für die Messung des Rohgasstaubgehaltes ist zwischen dem Kessel und dem MZA (2) angebracht. Für die Bestimmung des Reingasstaubgehaltes und der weiteren Emissionen wurden Entnahmestellen zwischen dem MZA und dem Abzweig des rezirkulierten Rauchgases (3, 4) vorgesehen.

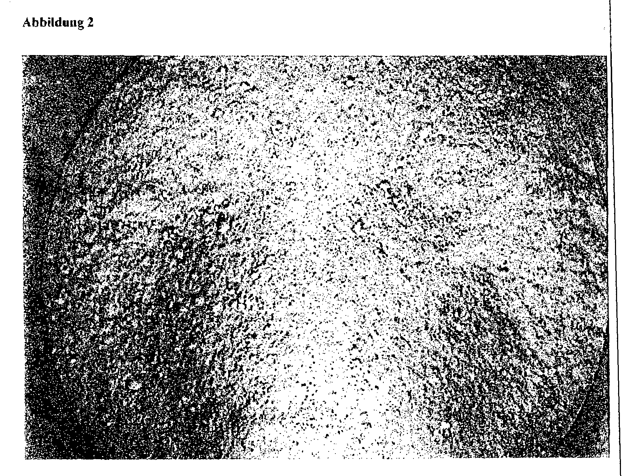

Im Vergleich zu Hackschnitzel war das Abbrandverhalten langsamer. Nach Optimierung der Zufuhr der Primärluftmenge wurde in der Rostzone ein homogenes und ruhiges Abbrandverhalten beobachtet. Es kam zu keiner Schlackebildung in der Asche (Abbildung 2: Auffangbehälter für die automatische Entaschung mit Restasche). Die Verschmutzung der Brenokammer nach dem Versuch war sehr gering. Die Werte der Staubemissionen lagen im Durchschnitt bei 440mg/Nm³ am Eintritt in den Kamin.

## Patentansprüche

**1.** Mischung umfassend
65%(w/w) bis 93%(w/w) krautige Pflanzen,
2%(w/w) bis 8%(w/w) Öl, und
5%(w/w) bis 27%(w/w) Holz

**2.** Die Mischung gemäß Anspruch 1, umfassend
65%(w/w) bis 90%(w/w) krautige Pflanzen,
3%(w/w) bis 8%(w/w) Öl, und
7%(w/w) bis 27%(w/w) Holz.

**3.** Die Mischung gemäß einem der vorherigen Ansprüche, umfassend
77,5%(w/w) bis 90%(w/w) krautige Pflanzen, bevorzugt geschroteter krautiger Pflanzen,
3%(w/w) bis 5,5%(w/w) Öl,
7%(w/w) bis 17%(w/w) Holz, und optional
1%(w/w) bis 5%(w/w) Brandkalk.

**4.** Die Mischung gemäß einem der vorherigen Ansprüche, wobei der Anteil krautiger Pflanzen mindestens 80% Getreide, bevorzugt Getreide ausgewählt aus einer Gruppe bestehend aus Weizen, Dinkel, Roggen, Hafer, Gerste, Triticale und Mischungen daraus, umfasst.

**5.** Die Mischung gemäß einem der vorherigen Ansprüche, wobei der Anteil krautiger Pflanzen aus geschroteten krautigen Pflanzen aus Getreideausputz besteht.

**6.** Die Mischung gemäß einem der Ansprüche 1 bis 5, wobei der Anteil krautiger Pflanzen Raps umfasst.

**7.** Die Mischung gemäß Anspruch 6, wobei der Anteil an Rapssamen im Anteil krautiger Pflanzen maximal 5%(w/w) beträgt.

**8.** Die Mischung gemäß einem der vorherigen Ansprüche, wobei der Anteil krautiger Pflanzen aus zerkleinertem Pflanzenmaterial mit einer maximalen Schrolgröße von 20 mm besteht.

**9.** Die Mischung gemäß einem der vorherigen Ansprüche, wobei das Holz aus Holzstückchen mit einer maximalen Korngröße von 10 cm besteht.

**9.** Die Mischung gemäß einem der vorherigen Ansprüche, wobei das Holz zu mindestens 80%(w/w) aus Holz von Douglasie (Pseudotsuga), Goldlärche (Pseudolarix amabilis), Hemlocktanne (Tsuga), Kiefer/Föhre (Pinus), Lärche (Larix), Lebensbaum (Thuja), Mammutbaum (Sequoioideae) (Chamaecyparis), Sicheltanne (Cryptomeria), Tanne (Abies), Zeder (Cedrus), Zypresse (Cupressus), Ahorn (Acer), Erle (Alnus), Birke (Betula), Hainbuche (Carpinus), Weißdorn (Crataegus), Ulme (Ulmus), Buche (Fagus), Esche (Fraxinus), Stechpalme (Ilex), Äpfel (Malus), Pappel (Populus), Steinobstbäume (Prunus), Birne (Pyrus), Eiche (Quercus), Weide (Salix), Mehlbeere (Sorbus), Linde (Tilia), Robinie (Robinia), Kastanien (Castanea), Platane (Platanus), Ulme (Ulmus), oder Mischungen daraus besteht.

**10.** Die Mischung gemäß einem der vorherigen Ansprüche, wobei das Öl Pflanzenöl oder Mischungen aus Pflanzenöl und Mineralöl oder tierischem Öl umfasst.

**11.** Die Mischung gemäß Anspruch 10, wobei das Pflanzenöl ausgewählt wird aus einer Gruppe bestehend aus Olivenöl, Palmöl, Cocosöl, Erdnussöl, Sonnenblumenöl, Sesamöl, Maisöl, Rapsöl, Nussöl oder Mischungen daraus, bevorzugt wobei das Pflanzenöl ein Pflanzenöl oder Pflanzenölmischungen mit mindestens einem Pflanzenöl ausgewählt aus einer Gruppe bestehend aus Rapsöl, Nussöl, Mandelöl und Mischungen daraus enthält.

**12.** Die Mischung gemäß einem der Ansprüche 1 bis 11, wobei Öl aus Pflanzenöl besteht.

**13.** Die Mischung gemäß einem der Ansprüche 1 bis 10, wobei Öl aus Mineralöl besteht.

**14.** Die Mischung gemäß einem der vorherigen Ansprüche, wobei der Wasseranteil in der Mischung zwischen 5%(w/w) und 24%(w/w) liegt.

**15.** Die Mischung gemäß einem der vorherigen Ansprüche, wobei diese Mischung in amorpher Form vorliegt.
